# EUROPÄISCHE PATENTSCHRIFT

(11) **EP 1 036 705 B1**
(45) Veröffentlichungstag und Bekanntmachung des Hinweises auf die Patenterteilung: **27.06.2007**
(21) Anmeldenummer: 00104241.5
(22) Anmeldetag: 02.03.2000
(51) Int. Cl.: B60Q 1/26

(54) **Fahrzeugleuchte**
Vehicle lights
Feux de véhicule

(30) Priorität: 18.03.1999 DE 19912156
(43) Veröffentlichungstag der Anmeldung: 20.09.2000
(73) Patentinhaber: Hella KGaA Hueck & Co., 59552 Lippstadt (DE)
(72) Erfinder: Schürhoff, Konrad, 59302 Oelde (DE)

(56) Entgegenhaltungen:
- EP-A- 0 791 502
- EP-A- 0 900 975
- DE-A- 19 541 509
- FR-A- 2 370 606
- FR-A- 2 726 235

## Beschreibung

Die Erfindung betrifft eine Fahrzeugleuchte mit einem Lampenträger enthaltend mehrere Öffnungen für Lampen, wobei der Lampenträger elektrisch leitfähig mit Leiterbahnen ausgebildet ist und auf einer Innenseite einer Gehäuseabdeckung mit derselben verbunden ist, daß die Lampen jeweils in einer durch die Gehäuseabdeckung und/ oder des Lampenträgers gebildeten Lampenfassung einsetzbar sind, wobei mindestens eine Lampenfassung in einem Winkel zu einer anderen Lampenfassung ausgerichtet ist, daß mindestens einer Lampe ein Reflektor zugeordnet ist.

Aus der EP 0 900 975 A2 ist eine Fahrzeugleuchte mit mehreren, jeweils Lampen zugeordneten Lampenträgern vorgesehen. Die Lampenträger sind jeweils in einer Öffnung einer Gehäuserückwand eingesetzt und arretiert. Den Lampenträgern sind jeweils Reflektoren zugeordnet. Diese sind nicht einstückig mit denselben verbunden.

Aus der DE 195 41 509 A1 ist eine Fahrzeugleuchte mit mehreren, jeweils Lampen zugeordneten Lampenträgern vorgesehen, die an Öffnungen einer Rückwand des Leuchtengehäuses angesetzt sind. Die mit dem Lampenträger verbundene Lampe ragt in eine rückseitige Öffnung eines Reflektors der Leuchte ein.

Aus der gattungsgemäßen DE 94 17 304 U1 ist eine Fahrzeugleuchte mit einem Lampenträger für mehrere Lampen bekannt, der an einer Innenseite einer rückseitig der Fahrzeugleuchte angebrachten Gehäuseabdeckung befestigt ist. Die Gehäuseabdeckung weist mehrere verteilt angeordnete Lampenfassungen zur Aufnahme jeweils einer Lampe auf. Die Lampenfassungen umgreifen jeweils Öffnungen, die in unterschiedlichen Richtungen orientiert sind. Zur Ermöglichung der Abnehmbarkeit der Gehäuseabdeckung zusammen mit den Lampen ist die Gehäuseabdeckung mit einem Filmscharnier versehen, so daß die Lampen unter Verschwenken ihrer Lampenachsen zueinander an der Rückseite der Fahrzeugleuchte entfernt werden können. An der bekannten Fahrzeugleuchte kann infolge der Materialermüdung im Bereich des Scharnieres die stationäre Lage der Lampen innerhalb der Leuchtenkammern in unerwünschter Weise verändert werden.

Aufgabe der vorliegenden Erfindung ist es, eine Fahrzeugleuchte mit einem Lampenträger für mehrere in unterschiedliche Richtungen orientierten Lampen derart weiterzubilden, daß eine Gehäuseabdeckung und ein mit dieser verbundener Lampenträger einen kompakten Aufbau aufweisen und daß eine einfache Montage- bzw. Demontage der Lampen gewährleistet ist.

Aufgabe der vorliegenden Erfindung ist es, eine Fahrzeugleuchte mit einem Lampenträger für mehrere in unterschiedliche Richtungen orientierten Lampen derart weiterzubilden, daß eine Gehäuseabdeckung und ein mit dieser verbundener Lampenträger einen kompakten Aufbau aufweisen und daß eine einfache Montage- bzw. Demontage der Lampen gewährleistet ist.

Zur Lösung dieser Aufgabe ist die Erfindung in Verbindung mit dem Oberbegriff des Patentanspruchs 1 dadurch gekennzeichnet, daß an dem Lampenträger ein Zusatzreflektor angeformt ist.

Der Vorteil der Erfindung besteht insbesondere darin, daß durch die Ausbildung eines Zusatzreflektors an dem Lampenträger die Außenseite der Gehäuseabdeckung verlängert wird. Dem Zusatzreflektor kommt somit eine doppelte Funktion zu. Zum einen wird der aus einem metallischen und zugleich reflektierendem Werkstoff bestehende Lampenträger dazu genutzt, durch Ausbildung einer Reflektorfläche den Lichtstrom in eine gewünschte Lichtausbreitungsrichtung einer Lampe zu erhöhen. Zum anderen dient der Zusatzreflektor durch den festgelegten Abstand zu der Lampe als "Schutzschild" bei der Montage bzw. Demontage der betreffenden Lampe. Durch die Ausbildung des erfindungsgemäßen Lampenträgers wird somit ein kompakter Aufbau der Gehäuseabdeckung verwirklicht, wobei eine sichere und zeitbeständige Positionierung von in unterschiedlichen Richtungen orientierten Lampen gewährleistet ist.

Nach einer bevorzugten Ausführungsform der Erfindung ist der Lampenträger langgestreckt ausgebildet und weist einen ebenen Hauptteil und einen in einem Winkel zu demselben ausgerichteten Winkelansatz auf. Der Hauptteil weist eine Mehrzahl von in einer Reihe angeordneten Öffnungen zur Aufnahme der Lampen auf. An einem dem Hauptteil abgewandten Ende des Winkelansatzes schließt sich ein löffelförmiger Zusatzreflektor an, der den endseitigen Abschluß der Gehäuseabdeckung bildet. Vorteilhaft kann an den Randseiten der Gehäuseabdeckung bzw. des Lampenträgers eine Mehrzahl von in unterschiedlichen Richtungen orientierten Lampen gehaltert werden. Hierdurch kann insbesondere eine an das jeweilige Raumplatzangebot angepaßte Variabilität der Anordnung von Lampen erzielt werden.

Nach einer Weiterbildung der Erfindung ist die Gehäuseabdeckung als quaderförmige Steckkappe ausgebildet, die mit dem Lampenträger eine bauliche Einheit bildet. Durch die im wesentlichen eben ausgebildete Innenseite der Steckkappe kann der Lampenträger entgegen der Lichtaustrittsrichtung an derselben montiert werden.

Nach einer Weiterbildung der Erfindung schließt sich der Winkelansatz unter einem rechten Winkel an den Hauptteil an. Der Zusatzreflektor erstreckt sich parallel zu der Hauptebene des Hauptteils. Vorteilhaft korrespondiert bei dieser Ausführungsform die Kontur des Zusatzreflektors zur Schnittfläche des Lampenumfangs mit einer durch die Lampenachse durchgehenden Ebene.

Ein Ausführungsbeispiel der Erfindung wird nachfolgend anhand der Zeichnungen näher erläutert.

Es zeigen:

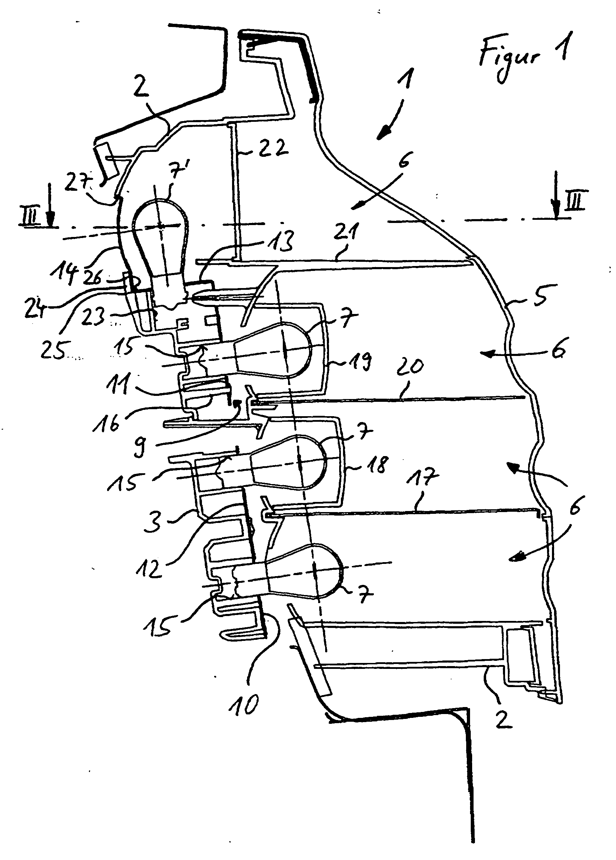

- Figur 1: einen Längsschnitt durch eine Fahrzeugleuchte,

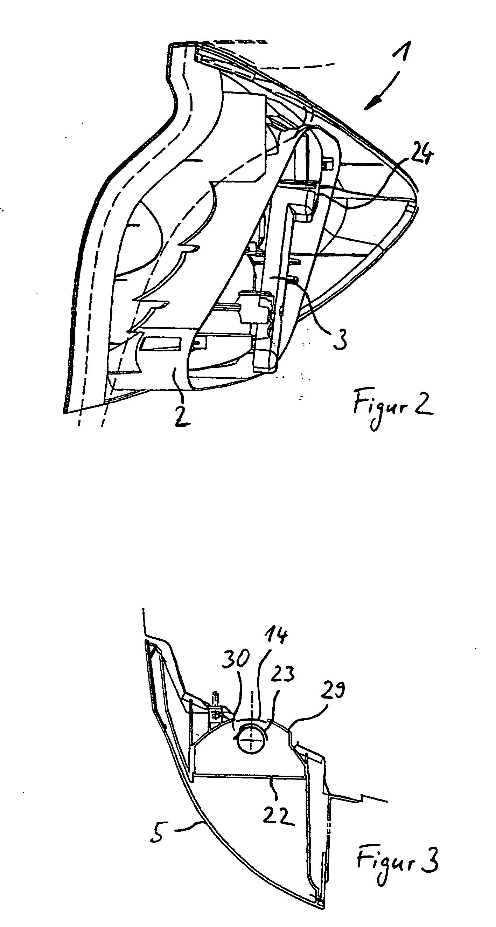

- Figur 2: eine Seitenansicht der Fahrzeugleuchte,

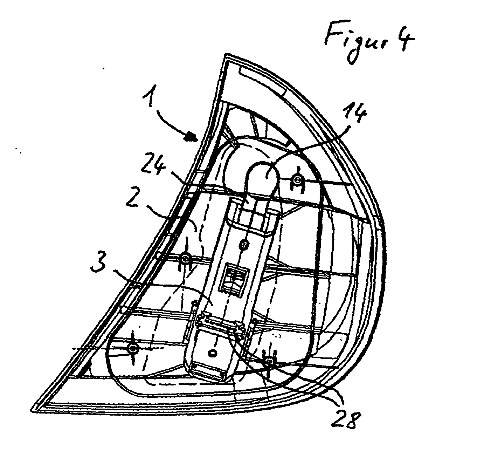

- Figur 3: einen Schnitt durch die Fahrzeugleuchte entlang der Linie III-III gemäß Figur 1 und
- Figur 4: eine Rückansicht einer Steckkappe.

Eine Fahrzeugleuchte 1 besteht im wesentlichen aus einem Gehäuse 2, einer rückseitigen Gehäuseabdeckung 3, einer nicht dargestellten Reflektoranordnung sowie einer das Gehäuse 2 abdeckenden Lichtscheibe 5.

Der durch die Gehäuseabdeckung 3 und die Lichtscheibe 5 begrenzte Innenraum ist in mehrere Lampenkammern 6 unterteilt, denen jeweils eine Lampe 7, 7' sowie jeweils ein Reflektor zugeordnet sind. Das Gehäuse 2 ist an einem Rand einer rückseitigen Karosserieöffnung eines Fahrzeugs befestigt.

Die Gehäuseabdeckung 3 ist als quaderförmige Steckkappe ausgebildet, wobei sich auf einer Innenseite 9 derselben ein Lampenträger 10 aus metallischem und reflektierendem Material, insbesondere aus einem Blechmaterial, erstreckt. Der Lampenträger 10 ist aus einem plattenförmigen Blechteil gestanzt und weist eine Mehrzahl von Leiterbahnen 11 auf. Der Lampenträger 10 besteht aus einem sich in einer Hauptebene erstreckenden Hauptteil 12, sich unter einem rechten Winkel anschließenden Winkelansatz 13 sowie aus einem sich an einem dem Hauptteil 12 abgewandten Ende des Winkelansatzes 13 anschließenden Zusatzreflektor 14. Der Hauptteil 12, der Winkelansatz 13 und der Zusatzreflektor 14 sind einstückig miteinander verbunden.

Entlang des Hauptteils 12 weist der Lampenträger 10 Öffnungen auf, die im Zusammenwirken mit einer zylinderförmig ausgebildeten Aufnahme 15 der Steckkappe 3 jeweils eine Lampenfassung bildet. An der Innenseite der Aufnahmen 15 greifen Ansätze des Hauptteils 12 an, die zum einen der Kontaktierung der jeweiligen Lampe 7 und zum anderen zur Ausbildung eines die Lampe 7 lagerichtig haltenden Bajonettverschlusses dienen.

Zur weiteren Halterung des Hauptteils 12 des Lampenträgers 10 weist die Steckkappe 3 von der Innenseite 9 abragende Stifte 16 auf, die in Führungsöffnungen des Hauptteils 12 eingreifen.

Im Bereich des Hauptteils 12 des Lampenträgers 10 werden drei Lampenkammern 6 gebildet. In einer unteren Lampenkammer 6 kann beispielsweise eine Lampe 7 für das Rückfahrlicht angeordnet sein. Die mittlere Lampenkammer 6 ist durch eine Trennwand 17 von der unteren Lampenkammer 6 getrennt und weist eine Lampe 7 mit einem gelben Kappenfilter 18 auf zur Erzeugung eines Blinklichtes. Die obere Lampe 7 kann als Schlußlicht ausgebildet sein mit einem dafür vorgesehenen Kappenfilter 19 und erstreckt sich innerhalb einer oberen Lampenkammer 6, die durch eine Trennwand 20 von der mittleren Lampenkammer 6 getrennt ist. Nach oben hin ist die obere Lampenkammer 6 durch ein weitere Trennwand 21 begrenzt.

Zwischen dieser Trennwand 21 und dem Gehäuse 2 ist eine zusätzliche Lampenkammer 6 ausgebildet, an deren der Lichtscheibe 5 abgewandten Seite eine aufrechte Lampe 7' angeordnet ist. Während die Lampen 7 des Hauptteils 12 reihenförmig im wesentlichen in einer vertikalen Ebene angeordnet sind, erstreckt sich die aufrechte Lampe 7' unter Bildung eines rechten Winkels zu den weiteren Lampen 7. Die Lampenachse der Lampe 7' ist senkrecht zu den Lampenachsen der Lampen 7 angeordnet.

Die Lampe 7' dient zur Erzeugung eines Bremslichtes. Die zusätzliche Lampenkammer 6 weist zu diesem Zweck eine entsprechende Filterwand 22 auf.

Zur Halterung der aufrechten Lampe 7' weist die Steckkappe 3 eine halbzylindrische Aufnahme 23 auf, deren Achse koaxial zur Achse der aufrechten Lampe 7' verläuft. Die im Querschnitt halbkreisförmige Aufnahme 23 weist auf einer der Lichtscheibe 5 zugewandten Seite die Öffnung auf, so daß der Lampenträger 10 entgegen der Lichtaustrittsrichtung der Fahrzeugleuchte 1 auf die Innenseite 9 der Steckkappe 3 aufgesetzt und an derselben arretiert werden kann. Darauffolgend kann dann die aufrechte Lampe 7' durch die Öffnung des Winkelansatzes 13 in die Aufnahme 23 eingesetzt werden und unter Verwendung des Bajonettverschlusses festgelegt werden. Damit die Lampe 7' bzw. der Winkelansatz 13 klemmend an der Steckkappe 3 anliegt, weist die Aufnahme 23 einen Wellenabschnitt 30 auf.

Der Zusatzreflektor 14 ist konkavförmig ausgebildet und ermöglicht die Reflexion des von der Lampe 7' ausgesandten Lichtes in Lichtaustrittsrichtung der Fahrzeugleuchte 1. Der Zusatzreflektor 14 wird durch ein nach oben hin abragenden Haltearm 24 der Steckkappe 3 entgegen der Lichtaustrittsrichtung abgestützt. In dem Bereich des Haltearms 24 erstreckt sich eine horizontale Knicklinie 25 zwischen dem Winkelansatz 13 und dem Zusatzreflektor 14. Vorzugsweise weist die Knicklinie 25 zwei zueinander beabstandete Versteifungspunkte 26 auf, die durch Prägung von einer der Steckkappe 3 zugewandten Seite her erfolgt ist. An einer dem Winkelansatz 13 abgewandten Seite des Zusatzreflektors 14 ist ein Anschlag 27 angeformt, mittels dessen die Steckkappe 3 beim Wiedereinsetzen der Lampen 7, 7' gegen einen Rand des Gehäuses 2 angelegt werden kann. Die Steckkappe 3 wird durch eine nicht dargestellte Verrastung mit dem Gehäuse 2 lösbar verbunden.

In einem unteren Bereich des Lampenträgers 10 laufen Leiterbahnen entlang einer horizontalen Linie zusammen, wobei durch Öffnungen der Steckkappe 3 zur Außenseite derselben hin abragende Kontaktstifte 28 des Lampenträgers 10 abragen. Diese sind verbindbar mit einem nicht dargestellten und mit dem Bordnetz des Fahrzeugs elektrisch verbundenen Stecker.

Die Steckkappe 3 ist vorzugsweise aus einem mittels Spritzgießen hergestellten Kunststoffteil ausgebildet. Die Reflektoranordnung besteht aus mehreren sich in horizontaler Richtung öffnenden Reflektoren 29. Diese sind mit einem spiegelnden Material bedampft. Eine entsprechende spiegelnde Bedampfung weist die innere Oberfläche des Gehäuses 2 auf.

## Patentansprüche

1. Fahrzeugleuchte mit einem Lampenträger (10) enthaltend mehrere Öffnungen für Lampen, wobei der Lampenträger elektrisch leitfähig mit Leiterbahnen (11) ausgebildet ist und auf einer Innenseite einer Gehäuseabdeckung mit derselben verbunden ist, dass die Lampen (7) jeweils in einer durch die Gehäuseabdeckung und/ oder des Lampenträgers (10) gebildeten Lampenfassung einsetzbar sind, wobei mindestens eine Lampenfassung in einem Winkel zu einer anderen Lampenfassung ausgerichtet ist, daß mindestens einer Lampe ein Reflektor zugeordnet ist, **dadurch gekennzeichnet, daß** an dem Lampenträger (10) ein Zusatzreflektor (14) angeformt ist, wobei der Lampenträger (10) und der Zusatzreflektor (14) einstückig miteinander verbunden sind.

2. Fahrzeugleuchte nach Anspruch 1, **dadurch gekennzeichnet, daß** der Lampenträger (10) langgestreckt ausgebildet ist, wobei ein Hauptteil (12) des Lampenträgers (10) eine Mehrzahl von in einer Ebene verlaufenden Öffnungen für die Lampen (7) aufweist, daß sich an einem randseitigen Ende des Lampenträgers (10) ein Winkelansatz (13) unter Bildung eines spitzen oder rechten Winkels zur Ebene des Hauptteils (12) anschließt und daß an einem zu dem Hauptteil (12) abgewandten Ende des Winkelansatzes (13) der Zusatzreflektor (14) angeordnet ist, der im wesentlichen senkrecht zur Erstreckung des Winkelansatzes (13) verläuft.

3. Fahrzeugleuchte nach Anspruch 1 oder 2, **dadurch gekennzeichnet, daß** die Gehäuseabdeckung als quaderförmige Steckkappe (3) ausgebildet ist, die mit dem Lampenträger (10) eine Baueinheit bildet.

4. Fahrzeugleuchte nach einem der Ansprüche 1 bis 3, **dadurch gekennzeichnet, daß** sich der Hauptteil (12) des Lampenträgers (10) in einer vertikalen Ebene erstreckt und daß sich der Zusatzreflektor (14) parallel zu der Ebene des Hauptteils (12) erstreckt.

5. Fahrzeugleuchte nach einem der Ansprüche 1 bis 4, **dadurch gekennzeichnet, daß** der Winkelansatz (13) eine Öffnung für die Lampe (7') aufweist und daß die Steckkappe (3) eine im Querschnitt halbkreisförmige Aufnahme (23) aufweist, in der die Lampe (7') klemmend gehalten ist.

6. Fahrzeugleuchte nach einem der Ansprüche 1 bis 5, **dadurch gekennzeichnet, daß** die halbkreisförmige Aufnahme (23) einen Wellenabschnitt (30) aufweist zur klemmenden Halterung der Lampe (7').

7. Fahrzeugleuchte nach einem der Ansprüche 1 bis 6, **dadurch gekennzeichnet, daß** der Lampenträger (10) rastend mit der Steckkappe (3) verbunden ist und daß die Steckkappe (3) verteilt angeordnete, von der Innenseite (9) derselben abragende Stifte (16) aufweist, die in korrespondierende Führungsöffnungen des Lampenträgers (10) eingreifen.

8. Fahrzeugleuchte nach einem der Ansprüche 1 bis 7, **dadurch gekennzeichnet, daß** der Zusatzreflektor (14) über eine horizontale Knicklinie (25) mit dem Winkelansatz (13) verbunden ist und daß die Knicklinie (25) mindestens einen Versteifungspunkt (26) aufweist.

9. Fahrzeugleuchte nach einem der Ansprüche 1 bis 8, **dadurch gekennzeichnet, daß** der Zusatzreflektor (14) eine konkavförmige Wölbung aufweist.

10. Fahrzeugleuchte nach einem der Ansprüche 1 bis 9, **dadurch gekennzeichnet, daß** der Zusatzreflektor (14) an einem dem Winkelansatz (13) abgewandten Ende einen Anschlag (27) aufweist.

11. Fahrzeugleuchte nach einem der Ansprüche 1 bis 10, **dadurch gekennzeichnet, daß** die Steckkappe (3) an einer dem Zusatzreflektor (14) zugewandten Seite einen abragenden Haltearm (24) aufweist zur Anlage zumindest eines Teils der der Steckkappe (3) zugewandten Seite des Zusatzreflektors (14).

## Claims

1. Lamp for vehicles with a bulb holder (10) having several apertures for bulbs, where the bulb holder is electrically conductive due to its conductive tracks (11), where the bulb holder is attached to one side on the inside of a housing cover, where the bulbs (7) can be placed in bulb sockets each made up by the housing cover and/or the bulb holder, where at least one bulb socket is arranged at an angle to another bulb socket and at least one bulb is allocated to a reflector, wherein an auxiliary reflector (14) is attached to the bulb holder (10) with the bulb holder (10) and the auxiliary reflector (14) making up a single-part unit.

2. Lamp for vehicles as in claim 1, wherein the bulb holder (10) is of an oblong shape and the main part (12) of the bulb holder (10) has several apertures for the bulbs (7) going along the same plane, where an angle bracket (13) continues over the edge-side end of the bulb holder (10) being at an acute or right angle with the plane of the main part (12) and where the auxiliary reflector (14) is more or less perpendicular to the axis of the angle bracket (13) and is located at the end of the angle bracket (13) that faces away from the main part (12).

3. Lamp for vehicles as in claims 1 or 2, wherein the housing cover is designed as a cuboid plug-type cap (3) that makes up an assembly together with the bulb holder (10).

4. Lamp for vehicles as in one of claims 1 to 3, wherein the main part (12) of the bulb holder (10) goes up a vertical plane and the auxiliary reflector (14) is parallel with the plane of the main part (12).

5. Lamp for vehicles as in one of claims 1 to 4, wherein the angle bracket (13) has an aperture for the bulb (7') and the plug-type cap (3) has a in a semicircular retainer (23) for clamping and holding the bulb (7').

6. Lamp for vehicles as in one of claims 1 to 5, wherein the semicircular retainer (23) has a sine-wave section (30) that clamps and holds the bulb (7').

7. Lamp for vehicles as in one of claims 1 to 6, wherein the bulb holder (10) is snapped on to the plug-type cap (3) and the plug-type cap (3) features an arrangement of pins (16) pointing away from the inside (9) of the cap and residing in corresponding openings of the bulb holder (10).

8. Lamp for vehicles as in one of claims 1 to 7, wherein the auxiliary reflector (14) attaches to the angle bracket (13) in a horizontal bend line (25) and the bend line (25) has at least one stiffening point (26).

9. Lamp for vehicles as in one of claims 1 to 8, wherein the auxiliary reflector (14) vaults in a concave shape.

10. Lamp for vehicles as in one of claims 1 to 9, wherein the auxiliary reflector (14) features a stop (27) at one of its ends facing away from the angle bracket (13).

11. Lamp for vehicles as in one of claims 1 to 10, wherein the plug-type cap (3) features a protruding holding element (24) on one of its sides facing towards the auxiliary reflector (14) so that at least some of the side of the auxiliary reflector (14) facing towards the plug-type cap (3) contacts the holding element (24).

## Revendications

1. Feu de véhicule avec un porte-lampes (10) comprenant plusieurs orifices pour lampes, le porte-lampes étant conçu de façon conductible avec des pistes conductrices (11) et étant rattaché à un couvercle de boîtier sur une face intérieure de celui-ci, les lampes (7) pouvant chacune être insérées dans une douille de lampe formée par le couvercle de boîtier et/ou le porte-lampes (10), au moins une douille de lampe étant orientée à un certain angle par rapport une autre douille de lampe, au moins un réflecteur étant affecté à une lampe, **caractérisé en ce qu'**un réflecteur supplémentaire (14) est formé sur le porte-lampes (10), le porte-lampes (10) et le réflecteur supplémentaire (14) étant assemblés l'un à l'autre d'un seul tenant.

2. Feu de véhicule selon la revendication 1, **caractérisé en ce que** le porte-lampes est conçu de façon allongée, un élément principal (12) du porte-lampes (10) présentant une multitude d'orifices pour lampes (7) s'étendant dans un plan, **en ce qu'**un épaulement angulaire (13) est contigu à une extrémité périphérique du porte-lampes (10) en formant un angle pointu ou droit par rapport au plan de l'élément principal (12) et **en ce que** le réflecteur supplémentaire (14), qui s'étend sensiblement perpendiculairement à l'étendue de l'épaulement angulaire (13), est disposé à une extrémité de l'épaulement angulaire (13) qui est opposée à l'élément principal (12).

3. Feu de véhicule selon la revendication 1 ou 2, **caractérisé en ce que** le couvercle de boîtier est conçu sous forme de capuchon enfichable parallélépipédique (3), qui forme une unité modulaire avec le porte-lampes (10).

4. Feu de véhicule selon l'une quelconque des revendications 1 à 3, **caractérisé en ce que** l'élément principal (12) du porte-lampes (10) s'étend dans un plan vertical et **en ce que** le réflecteur supplémentaire (14) s'étend parallèlement au plan de l'élément principal (12).

5. Feu de véhicule selon l'une quelconque des revendications 1 à 4, **caractérisé en ce que** l'épaulement angulaire (13) présente un orifice pour la lampe (7') et **en ce que** le capuchon enfichable (3) présente un logement (23) semi-circulaire en coupe transversale, dans lequel la lampe (7') est maintenue par serrage.

6. Feu de véhicule selon l'une quelconque des revendications 1 à 5, **caractérisé en ce que** le logement semi-circulaire (23) présente une section d'arbre (30) pour le maintien de la lampe (7') par serrage.

7. Feu de véhicule selon l'une quelconque des revendications 1 à 6, **caractérisé en ce que** le porte-lampes (10) est rattaché par enclenchement au capuchon enfichable (3) et **en ce que** le capuchon enfichable (3) présente des axes (16) répartis sur sa face intérieure (9) et dépassant de celle-ci, lesquels axes s'engagent dans des orifices de guidage correspondants du porte-lampes (10).

8. Feu de véhicule selon l'une quelconque des revendications 1 à 7, **caractérisé en ce que** le réflecteur supplémentaire (14) est rattaché à l'épaulement angulaire (13) par une ligne de pliage horizontale (25) et **en ce que** la ligne de pliage (25) présente au moins un point de renforcement (26).

9. Feu de véhicule selon l'une quelconque des revendications 1 à 8, **caractérisé en ce que** le réflecteur supplémentaire (14) présente une courbure concave.

10. Feu de véhicule selon l'une quelconque des revendications 1 à 9, **caractérisé en ce que** le réflecteur supplémentaire (14) présente une butée (27) à une extrémité opposée à l'épaulement angulaire (13).

11. Feu de véhicule selon l'une quelconque des revendications 1 à 10, **caractérisé en ce que** le capuchon enfichable (3) présente un bras de maintien saillant (24) sur un côté tourné vers le réflecteur supplémentaire (14) pour assurer le contact avec au moins une partie du côté du réflecteur supplémentaire (14) tourné vers le capuchon enfichable (3).
